# EUROPEAN PATENT SPECIFICATION

(11) **EP 4 142 379 B1**
(45) Date of publication and mention of the grant of the patent: **18.11.2026**
(21) Application number: 20934089.2
(22) Date of filing: 27.04.2020
(51) Int. Cl.: H04W 52/02, H04W 76/28, H04L 5/00

(54) **CHANNEL MONITORING METHOD, ELECTRONIC DEVICE, AND STORAGE MEDIUM**
KANALÜBERWACHUNGSVERFAHREN, ELEKTRONISCHE VORRICHTUNG UND SPEICHERMEDIUM
PROCÉDÉ DE SURVEILLANCE DE CANAL, DISPOSITIF ÉLECTRONIQUE ET SUPPORT DE STOCKAGE

(43) Date of publication of application: 01.03.2023
(73) Proprietor: GUANGDONG OPPO MOBILE TELECOMMUNICATIONS CORP., LTD., Wusha, Chang'an Dongguan Guangdong 523860 (CN)
(72) Inventor: HU, Yi, Dongguan, Guangdong 523860 (CN); LI, Haitao, Dongguan, Guangdong 523860 (CN)
(74) Representative: Manitz Finsterwald Patent- und Rechtsanwaltspartnerschaft mbB
(86) International application number: PCT/CN2020/087274
(87) International publication number: WO 2021/217351

(56) References cited:
- CN-A- 110 546 982
- HUAWEI ET AL: "Further discussion on the impact of DCI-based PDCCH skipping", vol. RAN WG2, no. Reno, USA; 20190513 - 20190517, 3 May 2019 (2019-05-03), XP051711203, Retrieved from the Internet <URL:http://www.3gpp.org/ftp/tsg%5Fran/WG2%5FRL2/TSGR2%5F106/Docs/R2%2D1906904%2Ezip> [retrieved on 20190503]
- HUAWEI, HISILICON: "Further discussion on the impact of DCI-based PDCCH skipping", 3GPP DRAFT; R2-1906904 FURTHER DISCUSSION ON THE IMPACT OF DCI-BASED PDCCH SKIPPING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20190513 - 20190517, 13 May 2019 (2019-05-13), Mobile Competence Centre ; 650, route des Lucioles ; F-06921 Sophia-Antipolis Cedex ; France , XP051730356
- HUAWEI, HISILICON: "Discussion on the impact of WUS to the C-DRX", 3GPP DRAFT; R2-1906903 DISCUSSION ON THE IMPACT OF WUS TO THE C-DRX, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20190513 - 20190517, 13 May 2019 (2019-05-13), Mobile Competence Centre ; 650, route des Lucioles ; F-06921 Sophia-Antipolis Cedex ; France , XP051730355
- CATT: "Report on [105bis#27][NR/Power Saving] – PDCCH skipping", 3GPP DRAFT; R2-1905665, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, Nevada, USA; 20190513 - 20190517, 13 May 2019 (2019-05-13), Mobile Competence Centre ; 650, route des Lucioles ; F-06921 Sophia-Antipolis Cedex ; France , XP051729166
- OPPO: "SR triggering and DRX operation", 3GPP DRAFT; R2-1905606 - SR TRIGGERING AND DRX OPERATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20190513 - 20190517, 13 May 2019 (2019-05-13), Mobile Competence Centre ; 650, route des Lucioles ; F-06921 Sophia-Antipolis Cedex ; France , XP051729109

## Description

### TECHNICAL FIELD

The disclosure relates to the technical field of wireless communication, and in particular, to a channel monitoring method and a terminal device.

### BACKGROUND

In a related art, when a terminal device monitors a channel, how to ensure the scheduling performance of the terminal device while saving the power consumption of the terminal device has not been clearly defined. 3GPP Draft R2-1906904 relates to the necessity of the DCI-based PDCCH skipping and its impact to the DRX. The proposal includes that if the UE initiates the RA procedure when the UE is applying the PDCCH skipping by following the DCI-based indication which was received before initiating RA procedure, the UE should ignore the DCI-based indication and keep the PDCCH monitoring. The document: HUAWEI ET AL: "Further discussion on the impact of DCI-based PDCCH skipping",3GPP DRAFT; R2-1906904 FURTHER DISCUSSION ON THE IMPACT OF DCI-BASED PDCCH SKIPPING, 3RD GENERATION PARTNERSHIP PROJECT (3GPP), MOBILE COMPETENCE CENTRE ; 650, ROUTE DES LUCIOLES ; F-06921 SOPHIA-ANTI, is a 3GPP discussion document that evaluates the necessity of DCI-based PDCCH skipping to provide power savings while maintaining high throughput . It proposes that UEs should continue running DRX timers but stop monitoring PDCCH during the skipping period unless specific events occur. Crucially, it recommends that UEs ignore skipping instructions and resume monitoring if a Scheduling Request (SR) is pending or if a Random Access (RA) procedure is initiated.

### SUMMARY

The embodiments of the disclosure provide a channel monitoring method and a terminal device, so that the scheduling performance of the terminal device can be ensured while saving the power consumption of the terminal device when the terminal device monitors a channel. The invention is set out in the appended set of claims.

According to the channel monitoring method and the terminal device provided by the embodiments of the disclosure, the channel monitoring method includes the method steps of claim 1 or claim 5. A corresponding terminal is described in claim 10 while a corresponding method at a network side is disclosed in clm. 9.

### BRIEF DESCRIPTION OF THE DRAWINGS

FIG. 1 illustrates an optional schematic diagram of a discontinuous reception cycle according to the embodiments of the disclosure.
FIG. 2 illustrates a schematic diagram of composition structure of a communication system not being part of the invention.
FIG. 3 illustrates an optional processing flowchart of a channel monitoring method according to the embodiments of the disclosure.
FIG. 4 illustrates a detailed processing flowchart of a channel monitoring method according to the embodiments of the disclosure.
FIG. 5 illustrates a schematic diagram that a terminal device monitors a PDCCH within a PDCCH skipping duration according to the embodiments of the disclosure.
FIG. 6 illustrates another detailed processing flowchart of a channel monitoring method according to the embodiments of the disclosure.
FIG. 7 illustrates another schematic diagram that a terminal device monitors a PDCCH within a PDCCH skipping duration according to the embodiments of the disclosure.
FIG. 8 illustrates yet another optional processing flowchart of a channel monitoring method according to the embodiments of the disclosure.
FIG. 9 illustrates yet another detailed processing flowchart of a channel monitoring method according to the embodiments of the disclosure.
FIG. 10 illustrates yet another schematic diagram that a terminal device monitors a PDCCH within a PDCCH skipping duration according to the embodiments of the disclosure.
FIG. 11 illustrates still another optional detailed processing flowchart of a channel monitoring method according to the embodiments of the disclosure.
FIG. 12 illustrates still another schematic diagram that a terminal device monitors a PDCCH within a PDCCH skipping duration according to the embodiments of the disclosure.
FIG. 13 illustrates another optional processing flowchart of a channel monitoring method according to the embodiments of the disclosure.
FIG. 14 illustrates a schematic diagram of optional composition structure of a terminal device not being part of the invention.
FIG. 15 illustrates a schematic diagram of optional composition structure of a network device not being part of the invention.
FIG. 16 illustrates another schematic diagram of optional composition structure of a terminal device not being part of the invention.
FIG. 17 illustrates a schematic diagram of hardware composition structure of an electronic device not being part of the invention.

### DETAILED DESCRIPTION

In order to provide a more detailed understanding of the features and technical contents of the embodiments of the disclosure, the implementation of the embodiments of the disclosure will be described in detail below with reference to the accompanying drawings, and the accompanying drawings are for illustrative purposes only and are not intended to limit the embodiments of the disclosure.

In a New Radio (NR) system, a network device may configure a Discontinuous Reception (DRX) function for a terminal device. The terminal device discontinuously monitors a PDCCH, so as to achieve the purpose of saving electricity for the terminal device. Each Medium Access Control (MAC) entity has one DRX configuration. The configuration parameters of the DRX may include:
1) a DRX-onDuration Timer, i.e., the duration of a terminal device waking up at the beginning of a DRX cycle;
2) a DRX-SlotOffset, i.e., the time delay of the terminal device starting the DRX-onDuration Timer.
3) a DRX-InactivityTimer, i.e., after the terminal device receives a PDCCH indicating uplink initial transmission or downlink initial transmission, a duration of the terminal device continuing monitoring the PDCCH.
4) a DRX-RetransmissionTimerDL, i.e., the longest duration of the terminal device monitoring the PDCCH indicating downlink retransmission scheduling. each downlink HARQ process (except the broadcast Hybrid Automatic Repeat Request (HARQ) processes) corresponds to one DRX-Retransmission TimerDL.
5) a DRX-RetransmissionTimerUL, i.e., the longest duration of the terminal device monitoring the PDCCH indicating Upper retransmission scheduling. Each uplink HARQ process corresponds to one DRX-RetransmissionTimerUL.
6) a DRX-LongCycleStartOffset, used to configure a Long DRX cycle, and a subframe offset at the beginning of the Long DRX Cycle and a Short DRX Cycle.
7) a DRX-ShortCycle, which is an optional configuration.
8) a DRX-ShortCycleTimer, which refers to the duration of the terminal device in the short DRX cycle (any PDCCH is not received), and is an optional configuration.
9) DRX-HARQ-RTT-TimerDL, i.e., the minimum pending time of the terminal device expecting to receive the PDCCH indicating downlink scheduling. Each downlink HARQ process (except the broadcast HARQ) corresponds to one DRX-HARQ-RTT-TimerDL.
10) DRX-HARQ-RTT-TimerUL, i.e., the minimum pending time of the terminal device expecting to receive the PDCCH indicating uplink scheduling. Each uplink HARQ process corresponds to one DRX-HARQ-RTT-TimerUL.

If the terminal device is configured with DRX, then the terminal device needs to monitor the PDCCH at the DRX Active Time. A DRX Active Time includes several cases as follows.
1) Any of the following five timers is running: DRX-onDurationTimer, DRX-InactivityTimer, DRX-RetransmissionTimerDL, DRX-RetransmissionTimerUL, and ra-ContentionResolutionTimer.
2) A Scheduling Request (SR) is transmitted on a PUCCH and is in a pending state.
3) In a competition-based random access process, the terminal device has not received an initial transmission indicated by the PDCCH scrambled by a Cell Radio Network Temporary Identifier (C-RNTI) after successfully receiving a random access response.

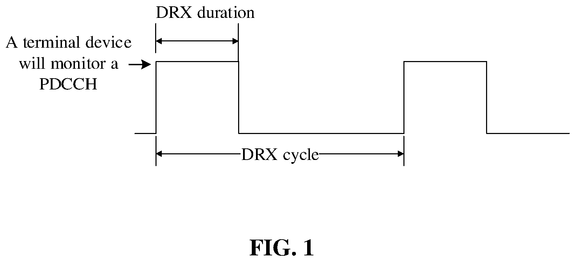

A schematic diagram of the DRX cycle of the terminal device is as illustrated in FIG. 1. The terminal device determines the time for starting the drx-onDurationTimer according to whether the terminal device is in the Short DRX Cycle or the Long DRX Cycle. Specific provisions are as follows.
1) If the terminal device is in the Short DRX Cycle, and the current subframe satisfies [(SFN×10) + subframe number] modulo (drx-ShortCycle) = (drx-StartOffset) modulo (drx-ShortCycle); or
2) If the terminal device is in the Long DRX Cycle, and the current subframe satisfies [(SFN×10) + subframe number] modulo (drx-LongCycle) = drx-StartOffset:
   the drx-onDurationTimer is started at a time after drx-SlotOffset slots from the current sub-frame.

The condition for the terminal device to start or restart a DRX-InactivityTimer is as follows.

If the terminal device receives a PDCCH indicating downlink or uplink initial transmission, then the terminal device starts or restarts the drx-InactivityTimer.

The condition for the terminal device to start and stop DRX-RetransmissionTimerDL is as follows.

When the terminal device receives a PDCCH indicating the downlink transmission, or when the terminal device receives a Medium Access Control Protocol Data Unit (MAC PDU) on configured downlink grant resources, then the terminal device stops the DRX-RetransmissionTimerDL corresponding to the HARQ process. A terminal starts the DRX-HARQ-RTT-TimerDL corresponding to the HARQ process after completing the transmission fed back by the HARQ process of this downlink transmission.

If the DRX-HARQ-RTT-TimerDL corresponding to a certain HARQ of the terminal device is timeout, and the downlink data transmitted by using the HARQ process is decoded unsuccessfully, then the terminal device starts the DRX-RetransmissionTimerDL corresponding to the HARQ process.

The condition for the terminal to start and stop the DRX-RetransmissionTimerUL is as follows.

When the terminal device receives a PDCCH indicating uplink transmission, or when the terminal device transmits a MAC PDU on the configured downlink grant resources, then the terminal device stops the DRX-RetransmissionTimerUL corresponding to the HARQ process. The terminal device starts the DRX-HARQ-RTT-TimerUL corresponding to the HARQ process after completing a first repetition of this Physical Uplink Share Channel (PUSCH).

If the DRX-HARQ-RTT-TimerUL corresponding to a certain HARQ of the terminal device is timeout, and the terminal device starts the DRX-RetransmissionTimerUL corresponding to the HARQ process.

A scheme of reducing blind detection of the PDCCH by the terminal device is proposed in a NR power saving project plan of a 3GPP version 17 (Rel-17). A PDCCH skipping mechanism is introduced in the scheme, that is, the network device may instruct the terminal device to skip the PDCCH monitoring in a period of time by transmitting dynamic signaling. For the terminal device configured with DRX, the terminal device monitors the PDCCH at the DRX active time. The general principle of PDCCH skipping is that when the terminal device receives a PDCCH skipping indication, the terminal device should follow the PDCCH skipping indication, that is the terminal device is at the DRX active time within the PDCCH skipping duration, and the terminal device skips PDCCH monitoring in a subsequent PDCCH skipping duration.

Generally, the network device will indicate a monitoring behavior of the terminal device on the basis of a downlink service requirement of the terminal device and an uplink service requirement previously reported by the terminal device through a Buffer Status Reports (BSR). In a case where the network device considers that the terminal device does not have an uplink and downlink data transmission requirement in a period of time in the future, the network device may indicate the terminal device to execute the PDCCH skipping within this period of time, so as to achieve the purpose of saving power for the terminal device. However, in a process of implementing the channel monitoring method, the applicant found that in some scenarios, the terminal device will trigger uplink transmission and expect further response from the network device. For example, there is uplink data arrives at the terminal device, an SR is triggered since there is no uplink resources for BSR reporting, or the terminal device transmits a PUSCH by using the CG resources, or the terminal device triggers the BFR, or the terminal device expects the network device to schedule a retransmission for a PDSCH reception failure of the SPS, etc. In these cases, because the terminal device expects the response of the network device, the terminal device has the requirement to monitor PDCCH. If the terminal device is in the PDCCH skipping duration at this time, based on the existing scheme, the terminal device needs to continue to skip PDCCH monitoring according to the PDCCH skipping indication transmitted by the network device. In the scenario, although the electric energy of the terminal device is saved, the terminal device cannot monitor the PDCCH because of expecting the response of the network device, which affects the transmission of a service.

The technical schemes of the embodiments of the disclosure may be applied to various communications systems, such as a Global System for Mobile Communications (GSM), a Code Division Multiple Access (CDMA) system, a Wideband Code Division Multiple Access (WCDMA) system, a General Packet Radio Service (GPRS) system, a Long Term Evolution (LTE) system, a Frequency Division Duplex (FDD) system, a Time Division Duplex (TDD) system, an Advanced Long Term Evolution (LTE-A) system, an NR system, an evolution system of the NR system, an LTE-based Access to Unlicensed Spectrum (LTE-U) system, a NR-based Access to Unlicensed Spectrum (NR-U) system, a Universal Mobile Telecommunications System (UMTS), a Universal Mobile Telecommunication System (UMTS), a Worldwide Interoperability for Microwave Access (WiMAX) communications system, a Wireless Local Area Network (WLAN), Wireless Fidelity (WiFi), a next generation of communication systems, or other communication systems.

Network architecture and service scenarios described in the embodiments of the disclosure are intended to describe the technical schemes in the embodiments of the disclosure more clearly, but are not intended to limit the technical schemes provided in the embodiments of the disclosure. Those of ordinary skill in the art may know that as the network architecture evolves and a new service scenario emerges, the technical schemes provided in the embodiments of the disclosure are also applicable to a similar technical problem.

The network device involved in the embodiments of the disclosure may be a common base station (NodeB or eNB or gNB), a New Radio controller (NR controller), a centralized unit, a new radio base station, a remote radio frequency module, a relay, a distributed network element, a transmission reception point (TRP), a transmission point (TP) or any other devices. No limits are made to specific technologies and specific device forms adopted by the network device in the embodiments of the disclosure. In order to facilitate description, in all embodiments of the disclosure, the abovementioned apparatuses with a wireless communication function provided for the terminal device are collectively referred to a network device.

In the embodiments of the disclosure, the terminal device may be any terminal. For example, the terminal device may be a User Equipment (UE) in Machine Type Communication (MTC). That is to say, the terminal device may also be called the UE, a Mobile Station (MS), a Mobile Terminal (MT), a terminal, etc. The terminal device may communicate with one or more core networks through a Radio Access Network (RAN). For example, the terminal device may be a mobile terminal (or referred to as a "cellular" phone) and a computer with a mobile terminal. For example, the terminal device may also be a portable, pocket-sized, hand-held, computer built-in, or in-vehicle mobile apparatus, which exchanges language and/or data with the RAN. No specific limitation are made thereto in the embodiments of the disclosure.

Optionally, the network device and the terminal device may be deployed on land, including indoors or outdoors, and may be held in hands or deployed in vehicles, or may be deployed on water, or may be deployed on an aircraft, a balloon, and an artificial satellite in the air. No limits are made to the disclosure scenario of the network device and the terminal device in the embodiments of the disclosure.

Optionally, communication may be performed between the network device and the terminal device and between the terminal devices through a licensed spectrum, or through an unlicensed spectrum, or through the licensed spectrum and the unlicensed spectrum simultaneously. Communication may be performed between the network device and the terminal device and between the terminal devices through a spectrum below 7 gigahertz (GHz), or through a spectrum above 7 GHz, or through the spectra below 7 GHz and above 7 GHz simultaneously. No limits are made to the spectrum resource used between the network device and the terminal device in the embodiments of the disclosure.

Generally speaking, traditional communication systems support a limited number of connections and are easy to implement. However, with the development of the communication technology, mobile communication systems will not only support traditional communication, but also support, for example, Device to Device (D2D) communication, Machine to Machine (M2M) communication, MTC, and Vehicle to Vehicle (V2V) communication, etc. The embodiments of the disclosure can also be applied to these communication systems.

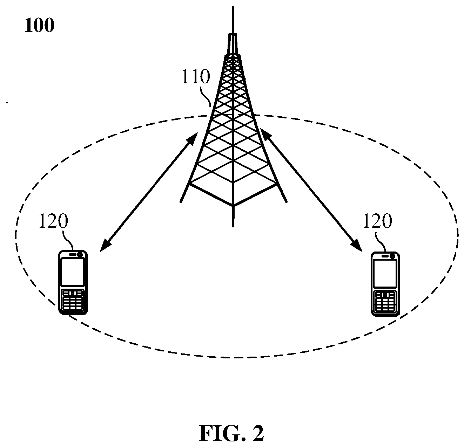

Exemplarily, the communication system 100 to which the embodiments of the disclosure is applied is as illustrated in FIG. 2. The communication system 100 may include a network device 110. The network device 110 may be a device in communication with a terminal device 120 (or called a communication terminal device or a terminal). The network device 110 may provide communication coverage for a specific geographical area, and may communicate with the terminal device located within the coverage. Optionally, the network device 110 may be a Base Transceiver Station (BTS) in the GSM or the CDMA system, may also be a NodeB (NB) in the WCDMA system, and may further be an Evolutional Node B (eNB or eNodeB) in the LTE system or a wireless controller in a Cloud Radio Access Network (CRAN). Or the network device may be a mobile switching center, a relay station, an access point, an on-board device, a wearable device, a hub, a switch, a network bridge, a router, a network-side device in a future 5G network, a network device in a future evolved Public Land Mobile Network (PLMN) or the like.

The communication system 100 further includes at least one terminal device 120 located within the coverage of the network device 110. A "terminal device" used herein includes, but not is limited to, an apparatus arranged to receive/transmit a communication signal through a wired line connection, for example, through Public Switched Telephone Network (PSTN), Digital Subscriber Line (DSL), digital cable and direct cable connections, and/or another data connection/network) and/or through a wireless interface, for example, for a cellular network, a Wireless Local Area Network (WLAN), a digital television network like a Digital Video Broadcasting-Handheld (DVB-H) network, a satellite network and an Amplitude Modulated (AM)-Frequency Modulated (FM) broadcast transmitter, and/or another terminal device, and/or an Internet of Things (IoT) device. The terminal device arranged to communicate through a wireless interface may be called a "wireless communication terminal", a "wireless terminal" or a "mobile terminal". Examples of the mobile terminal include, but are not limited to, satellite or cellular phones, Personal Communications System (PCS) terminals that can combine cellular radiotelephones with data processing, fax, and data communication capabilities, PDAs that can include radiotelephones, pagers, Internet/Intranet access, Web browsers, notebooks, calendars, and/or Global Positioning System (GPS) receivers, and conventional laptop and/or hand-held receivers or other electronic devices including radiotelephone transceivers. The terminal device may also be referred to as UE, a subscriber unit, a subscriber station, a mobile console, a mobile station, a remote station, a remote terminal, a mobile device, a user terminal, a terminal, a wireless communications device, a user agent, or a user apparatus. The access terminal may be a cellular phone, a cordless phone, a Session Initiation Protocol (Session Initiation Protocol, SIP) phone, a Wireless Local Loop (WLL) station, a Personal Digital Assistant (PDA), a hand-held device having a wireless communication function, a computing device or another processing device connected to a wireless modem, an on-board device, a wearable device, a terminal device in a 5G network, a terminal device in a PLMN in future evolution, or the like.

Optionally, D2D communication may be performed between the terminal devices 120.

Optionally, a 5G system or a 5G network may also be called an NR system or an NR network.

FIG. 2 exemplarily illustrates one network device and two terminal devices. Optionally, the communication system 100 may include a plurality of network device and the coverage of each network device may include other number of terminal devices. No limits are made thereto in the embodiments of the disclosure.

Optionally, the communication system 100 may further include other network entities, such as a network controller and a mobile management entity. No limits are made thereto in the embodiments of the disclosure.

It is to be understood that a device with a communications function in a network/a system in the embodiments of the disclosure may be called a communication device. Taking a communication system 100 as illustrated in FIG. 2, the communications device may include a network device 110 and a terminal device 120 with a communications function. The network device 110 and the terminal device 120 may be specific devices as described above, which will not be elaborated herein. The communication device 100 may also include other devices, for example, other network entities, such as a network controller and a mobile management entity. No limits are made thereto in the embodiments of the disclosure.

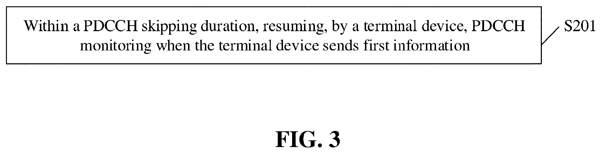

An optional processing flow of a channel monitoring method provided by the embodiments of the disclosure, as illustrated in FIG. 3, includes the following operations.

At S201, within a PDCCH skipping duration, a terminal device resumes PDCCH monitoring when the terminal device sends first information.

In some embodiments, the first information includes at least one of the following: an SR and a Preamble.

In some embodiments, the operation that the terminal device resumes the PDCCH monitoring can also be understood as that the terminal device is switched from a PDCCH monitoring skipping state into a PDCCH monitoring state.

In some embodiments, a PDCCH skipping duration may also be referred to as PDCCH skipping onduration, that is, the network device indicates the terminal device not to monitor the PDCCH within the PDCCH skipping onduration.

For a scenario where the first information includes the SR, if the terminal device transits the SR through the PDCCH in the PDCCH skipping duration, and the SR is in a pending state, then the terminal device monitors the PDCCH on all activated serving cells; or the terminal device determines to monitor the PDCCH on at least one activated serving cell according to a related parameter of a Logical Channel Prioritization (LCP) restriction of an uplink logical channel that triggers the SR. In a case where the uplink logical channel that triggers the SR is not configured with the related parameter of the LCP restriction, the terminal device determines to monitor the PDCCH on all activated serving cells; in a case where the uplink logical channel that triggers the SR is configured with the related parameter of the LCP restriction, the terminal device determines a first serving cell set that is allowed to transmit the uplink logical channel according to the related parameter of the LCP restriction; the terminal device determines to monitor the PDCCH on a serving cell corresponding to uplink scheduling information that can indicate any serving cell in the first serving cell set, that is, the terminal device determines to monitor the PDCCH on a serving cell corresponding to the PDCCH that can transmit the uplink scheduling indicating any serving cell in the first serving cell set.

The related parameter of the LCP restriction is configured by the network device, and is used to limit the serving cell allowed for the transmission of the uplink logical channel. The related parameter of the LCP limit includes, but is not limited to, the following parameters.
1) allowedServingCells, i.e., a list of serving cells that are allowed to transmit the uplink logical channel.
2) allowedSCS-List, i.e., a list of subcarrier spacings that are allowed to transmit the uplink logical channel.

For a scenario where the first information includes a Preamble, if the terminal device triggers Beam Failure Recovery (BFR) in a PDCCH skipping duration, then the terminal device transmits the Preamble transmitted on corresponding Random Access Channel (RACH) resources on the basis of a selected Synchronous Signal Block/Physical Broadcast Channel (SS/PBCH Block, SSB), starts a Random Access Response window (RAR window) for a four-operation random access case, or starts a message (Msg B) window for a two-operation random access case. The terminal device monitors a Cell Radio Network Temporary Identifier (C-RNTI) scrambled PDCCH at the RAR window or the Msg B window.

It is to be noted that, in the embodiments of the disclosure, the terminal device stops PDCCH skipping in a case of monitoring the PDCCH.

The channel monitoring method provided by the embodiments of the disclosure is described in detail below with respect to different contents included in the first information.

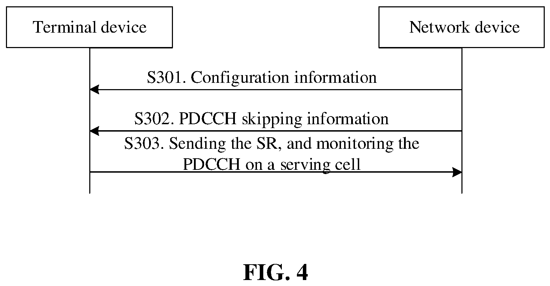

For a scenario where the first information includes an SR, an optional detail processing flow of a channel monitoring method provided by the embodiments of the disclosure, as illustrated in FIG. 4, includes the following operations.

At S301, a terminal device receives configuration information sent by a network device through RRC signaling.

In some embodiments, the configuration information may include at least one of the following: a DRX configuration parameter, an uplink logical channel related configuration, and an SR related configuration.

Optionally, the configuration information includes:
a) the DRX configuration parameter, which may include: long DRX cycle, drx-onDurationTimer, drx-InactivityTimer, etc.
b) for each uplink logical channel of the terminal device, a network device may choose whether to configure PUCCH resources for transmitting an SR for the uplink logical channel. If the network device chooses to configure the PUCCH resources for transmitting an SR for the uplink logical channel, then the network device configures 0 or 1 PUCCH resource for transmitting the SR for the uplink logical channel on each UpLink Bandwidth Part (UL BWP) of each serving cell of the terminal device.
c) for each uplink logical channel of the terminal device, the network device may configure a related parameter of the LCP restriction for the uplink logical channel. The related parameter of the LCP restriction is used to limit the serving cell allowed for the transmission of the uplink logical channel. The related parameter of the LCP limit includes, but is not limited to, the following parameters.
   1) allowedServingCells, that is, a list of serving cells that are allowed to transmit the uplink logical channel.
   2) allowedSCS-List, that is, a list of subcarrier spacings that are allowed to transmit the uplink logical channel.

At S302, the terminal device receives the PDCCH skipping information sent by the network device corresponding to the serving cell.

In some embodiments, the PDCCH skipping information indicates the terminal device to skip the PDCCH monitoring. The PDCCH monitoring may include a PDCCH skipping duration.

In some embodiments, the terminal device does not monitor to the PDCCH on the service cell during the subsequent PDCCH skipping duration from the completion of receiving a next symbol of the PDCCH after the terminal device receives the PDCCH skipping information.

At S303, the terminal device sends the SR, and monitors the PDCCH on the serving cell.

In some embodiments, if the terminal device transmits the SR through the PDCCH and the SR is in a pending state in the PDCCH skipping duration, then the terminal device stops PDCCH skipping, and monitors on the PDCCH on all activated serving cells; or the terminal device determines to monitor the PDCCH on at least one activated serving cell according to the related parameter of the LCP restriction of the uplink logical channel that triggers the SR.

Optionally, the terminal device determines to monitor the PDCCH on all activated serving cells in a case where the uplink logical channel that triggers the SR is not configured with the related parameter of the LCP restriction.

Optionally, in a case where the uplink logical channel that triggers the SR is not configured with the related parameter of the LCP restriction, the terminal device determines a first serving cell set that is allowed to transmit the uplink logical channel according to the related parameter of the LCP restriction; the terminal device determines to monitor the PDCCH on a serving cell corresponding to uplink scheduling information that can indicate any serving cell in the first serving cell set, that is, the terminal device determines to monitor the PDCCH on a serving cell corresponding to the PDCCH that can transmit the uplink scheduling indicating any serving cell in the first serving cell set.

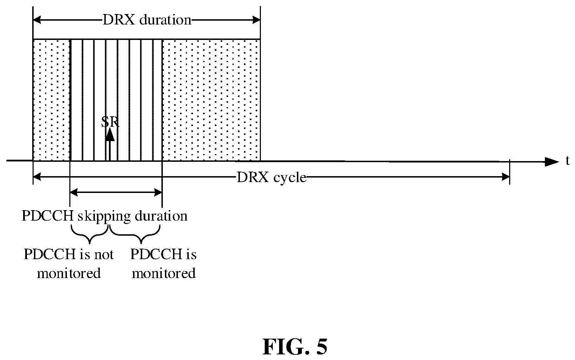

Based on a channel monitoring method as illustrated in FIG. 4, a schematic diagram that a terminal device monitors a PDCCH within a PDCCH skipping duration of the embodiments of the disclosure is as illustrated in FIG. 5. In the PDCCH skipping duration, the terminal device stops monitoring the PDCCH before transmitting the SR. During the PDCCH skipping duration, the terminal device monitors the PDCCH on the serving cell after transmitting the SR.

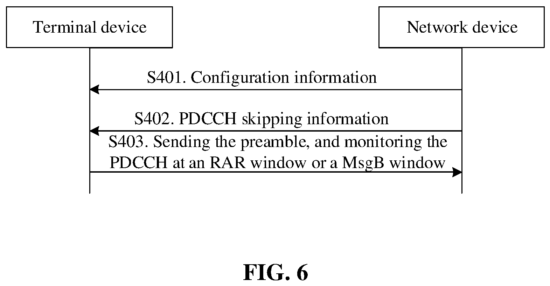

For a scenario where the first information includes a Preamble, another optional detail processing flow of a channel monitoring method provided by the embodiments of the disclosure, as illustrated in FIG. 6, includes the following operations.

At S401, a terminal device receives configuration information sent by a network device through RRC signaling.

In some embodiments, the configuration information may include at least one of the following: a DRX configuration parameter, and a BFR related configuration.

Optionally, the configuration information includes:
a) the DRX configuration parameter, which may include: long DRX cycle, drx-onDurationTimer, drx-InactivityTimer, etc.
b) a BFR configuration parameter, which may include a non-competition-based RACH configuration for BRF, a candidate Channel State Information Reference Signal (CSI-RS) and/or an SSB list.

At S402, the terminal device receives the PDCCH skipping information sent by the network device corresponding to the serving cell.

In some embodiments, the PDCCH skipping information indicates the terminal device to skip the PDCCH monitoring. The PDCCH skipping information may include a PDCCH skipping duration.

In some embodiments, the terminal device does not monitor to the PDCCH on the service cell during the subsequent PDCCH skipping duration from the completion of receiving a next symbol of the PDCCH after the terminal device receives the PDCCH skipping information.

At S403, the terminal device sends the Preamble, and monitors the PDCCH at the RAR window or the Msg B window.

In some embodiments, if the terminal device triggers BFR in a PDCCH skipping duration, then the terminal device transmits the Preamble transmitted on corresponding RACH resources on the basis of a selected SSB, starts a RAR window for a four-operation random access case, or starts an Msg B window for a two-operation random access case. The terminal device stops the PDCCH skipping, and monitors the C-RNTI-scrambled PDCCH at the RAR window or the Msg B window.

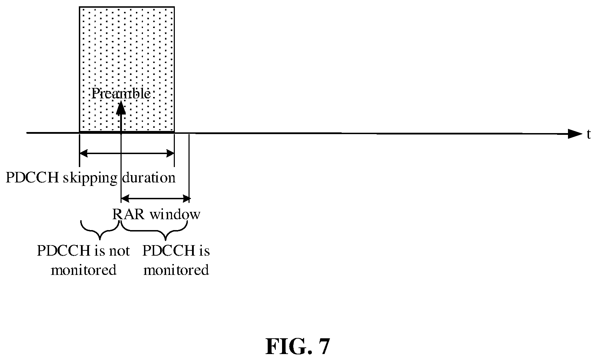

Based on a channel monitoring method as illustrated in FIG. 6, another schematic diagram that a terminal device monitors a PDCCH within a PDCCH skipping duration of the embodiments of the disclosure is as illustrated in FIG. 7. In the PDCCH skipping duration, the terminal device stops monitoring the PDCCH before transmitting the Preamble. During the PDCCH skipping duration, the terminal device monitors the PDCCH on the serving cell after transmitting the SR.

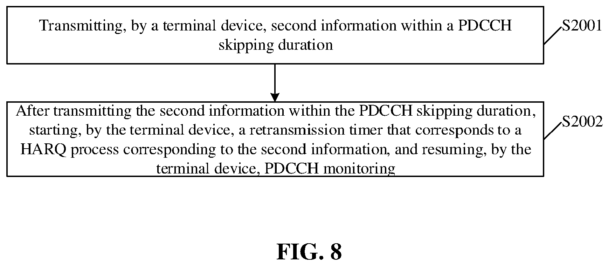

Another optional processing flow of a channel monitoring method provided by the embodiments of the disclosure, as illustrated in FIG. 8, includes the following operations.

At S2001, a terminal device sends second information within a PDCCH skipping duration.

In some embodiments, the second information includes: uplink transmission based on CG resources, or a NACK message for downlink transmission received by the terminal device on the SPS resources in the PDCCH skipping duration. The uplink transmission based on the CG resources may be the uplink transmission transmitted on the CG resources.

At S2002, after transmitting the second information within the PDCCH skipping duration, the terminal device starts a retransmission timer that corresponds to a HARQ process corresponding to the second information, and resumes PDCCH monitoring.

In some embodiments, the terminal device resumes the PDCCH monitoring can also be understood that the terminal device is switched from a PDCCH monitoring skipping state into a PDCCH monitoring state.

In some embodiments, the PDCCH skipping duration may also be referred to as PDCCH skipping onduration, that is, the network device indicates the terminal device not to monitor the PDCCH in the PDCCH skipping onduration.

For the scenario where the second information includes the uplink transmission based on the CG resources, after the terminal device transmits the uplink transmission on the CG resources, an HARQ process i is used for the uplink transmission, and then the terminal device starts drx-HARQ-RTT-TimerUL corresponding to the HARQ process i at a first (time) symbol after the uplink transmission is completed. In the PDCCH skipping duration, the terminal device starts the drx-RetransmissionTimerUL corresponding to the HARQ process i, and simultaneously, monitors the PDCCH on the serving cell in a case where the DRX-HARQ-RTT-TimerUL, which corresponds to the HARQ process i corresponding to the uplink transmission data, is timeout.

For the scenario where the second information includes the NACK message for the downlink transmission received by the terminal device on the SPS resources within the PDCCH skipping duration, the PDSCH corresponds to an HARQ process k, then the terminal device starts the drx-HARQ-RTT-TimerDL corresponding to the HARQ process i after the terminal device completes the NACK feedback for the downlink transmission. In the PDCCH skipping duration, in a case where the DRX-HARQ-RTT-TimerDL corresponding to the HARQ process k is timeout, the terminal device starts the drx-RetransmissionTimerDL corresponding to the HARQ process k, and monitors the PDCCH on the serving cell, or monitors the PDCCH on the serving cell according to the configuration of the network device. The configuration of the network device may be carried in a system broadcast message or RRC signaling.

It is to be noted that, in the embodiments of the disclosure, the terminal device stops PDCCH skipping in a case of monitoring the PDCCH.

The channel monitoring method provided by the embodiments of the disclosure is described in detail below with respect to different contents included in the second information.

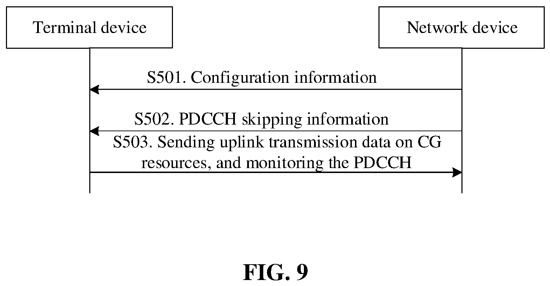

For a scenario where the second information includes the uplink transmission based on the CG resources, yet another optional detail processing flow of a channel monitoring method provided by the embodiments of the disclosure, as illustrated in FIG. 9, includes the following operations.

At S501, a terminal device receives configuration information sent by a network device through RRC signaling.

In some embodiments, the configuration information may include at least one of the following: a DRX configuration parameter, and a CG configuration parameter.

Optionally, the configuration information includes:
a) the DRX configuration parameter, which may include: long DRX cycle, drx-onDurationTimer, drx-InactivityTimer, etc.
b) the CG configuration parameter, which may include: CS-RNTI, which is the number of uplink HARQ processes reserved for CG, a CG resource cycle, a CG time-frequency resource, etc.

At S502, the terminal device receives the PDCCH skipping information sent by a network device corresponding to a serving cell.

In some embodiments, the PDCCH skipping information indicates the terminal device to skip the PDCCH monitoring. The PDCCH skipping information may include a PDCCH skipping duration.

In some embodiments, the terminal device does not monitor to the PDCCH on the service cell during the subsequent PDCCH skipping duration from the completion of receiving a next symbol of the PDCCH after the terminal device receives the PDCCH skipping information.

At S503, the terminal device sends the uplink transmission data on the CG resources, and monitors the PDCCH on the serving cell.

In some embodiments, if the terminal device transmits the uplink transmission data on the CG resources in the PDCCH skipping duration, an HARQ process i is used for the uplink transmission data, then the terminal device starts the DRX-HARQ-RTT-TimerUL corresponding to the HARQ process i at the first symbol after transmitting the uplink transmission data is sent, and the terminal device starts the drx-RetransmissionTimerUL corresponding to the HARQ process i, and simultaneously, monitors the PDCCH on the serving cell if the DRX-HARQ-RTT-TimerUL corresponding to the HARQ process i is timeout.

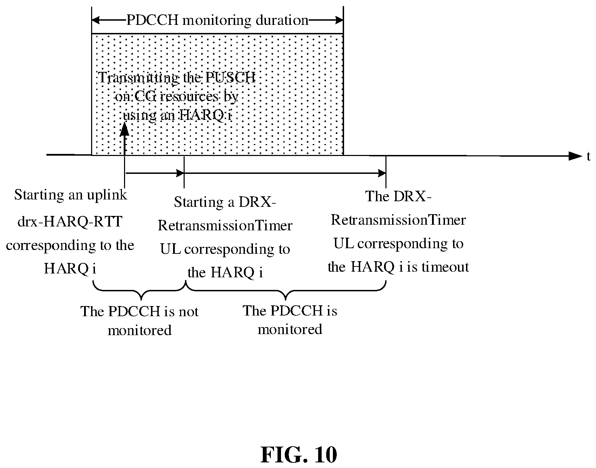

Based on a channel monitoring method as illustrated in FIG. 9, yet another schematic diagram that a terminal device monitors a PDCCH within a PDCCH skipping duration of the embodiments of the disclosure is as illustrated in FIG. 10. In the PDCCH skipping duration, the terminal device transmits the uplink transmission data on the CG resources, and the terminal device stops monitoring the PDCCH before the DRX-HARQ-RTT-TimerUL, which corresponds to the HARQ process i corresponding to the uplink transmission data, is timeout. In the PDCCH skipping duration, the terminal device starts the drx-RetransmissionTimerUL corresponding to the HARQ process i, and simultaneously, monitors the PDCCH on the serving cell in a case where the DRX-HARQ-RTT-TimerUL, which corresponds to the HARQ process i corresponding to the uplink transmission data, is timeout.

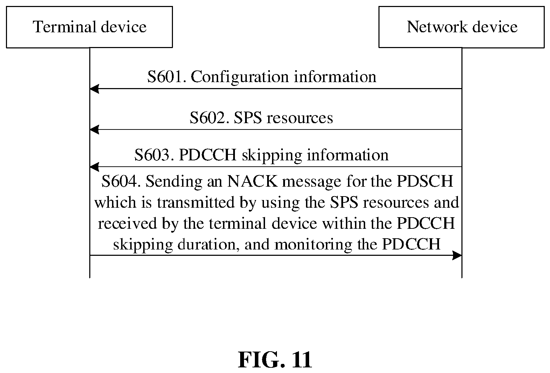

For a scenario where the second information includes the NACK message for the downlink transmission received by the terminal device in the PDCCH skipping duration, still another optional detailed processing flow of the channel monitoring method provided by the embodiments of the disclosure, as illustrated in FIG. 11, includes the following operations.

At S601, a terminal device receives configuration information sent by a network device through RRC signaling.

In some embodiments, the configuration information may include at least one of the following: a DRX configuration parameter, and an SPS configuration parameter.

Optionally, the configuration information includes:
a) the DRX configuration parameter, which may include: long DRX cycle, drx-onDurationTimer, drx-InactivityTimer, etc.
b) the SPS configuration parameter, which may include: a CS-RNTI, which is the number of downlink HARQ processes reserved for SPS, an SPS resource cycle, etc.

At S602, the terminal device receives the SPS resource indicated by the network device.

At S603, the terminal device receives the PDCCH skipping information sent by a network device corresponding to a serving cell.

In some embodiments, the PDCCH skipping information indicates the terminal device to skip the PDCCH monitoring. The PDCCH skipping information may include a PDCCH skipping duration.

In some embodiments, the terminal device does not monitor to the PDCCH on the service cell during the subsequent PDCCH skipping duration from the completion of receiving a next symbol of the PDCCH after the terminal device receives the PDCCH skipping information.

At S604, the terminal device sends the NACK message for the PDSCH which is transmitted by using the SPS resources and received by the terminal device within the PDCCH skipping duration, and monitors the PDCCH on the serving cell.

In some embodiments, the terminal device receives the PDSCH transmitted by the network device on the SPS resources in the PDCCH skipping duration, the PDSCH corresponds to an HARQ process k. The terminal device starts the DRX-HARQ-RTT-TimerDL corresponding to the HARQ process k after sending the NACK message for the received PDSCH to the network device. The terminal device starts the drx-RetransmissionTimerDL corresponding to the HARQ process k and monitors the PDCCH on the serving cell, or monitors the PDCCH on the serving cell according to the configuration of the network device in a case where the DRX-HARQ-RTT-TimerDL corresponding to the HARQ process k is timeout. The configuration of the network device may be carried in a system broadcast message or RRC signaling.

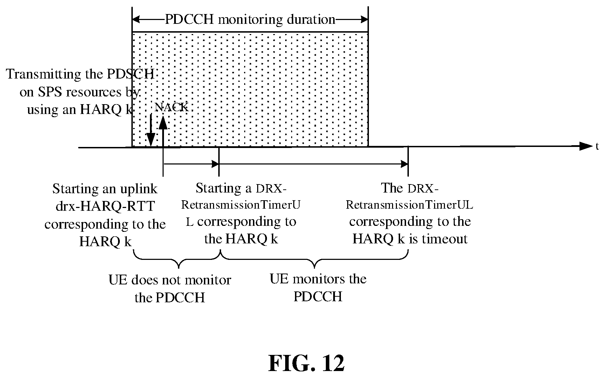

Based on the channel monitoring method as illustrated in FIG. 11, a schematic diagram that a terminal device monitors a PDCCH within a PDCCH skipping duration of the embodiments of the disclosure is as illustrated in FIG. 12. In the PDCCH skipping duration, the terminal device sends a NACK message for the received PDSCH to a network device, and the terminal device stops monitoring the PDCCH before the DRX-HARQ-RTT-TimerDL, which corresponds to the HARQ process k corresponding to the PDSCH, is timeout. In the PDCCH skipping duration, the terminal device starts the drx-RetransmissionTimerDL corresponding to HARQ process k, and simultaneously, the terminal device monitors the PDCCH on a serving cell in a case where the DRX-HARQ-RTT-TimerDL, which corresponds to the HARQ process k corresponding to the PDSCH, is timeout.

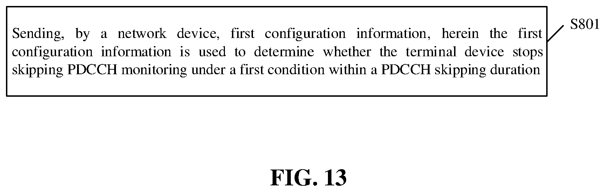

Another optional processing flow of a channel monitoring method provided by the embodiments of the disclosure, as illustrated in FIG. 13, includes the following operations.

At S801, a network device sends first configuration information. The first configuration information is used to determine whether the terminal device stops skipping the PDCCH monitoring under a first condition within the PDCCH skipping duration.

In some embodiments, the first condition includes that: the network device receives a NACK message sent by the terminal device for a PDSCH.

Correspondingly, in some embodiments, the method may also include the following operations.

A network device transmits a PDSCH to a terminal device on SPS resources in a PDCCH skipping duration. The network device receives the NACK message transmitted by the terminal device for the PDSCH. The first configuration information is used for the terminal device to determine whether to stop skipping the PDCCH after transmitting the NACK message for the PDSCH.

In various embodiments of the disclosure, it is clear that the terminal device resumes the PDCCH monitoring within the PDCCH skipping duration in the scenarios where the terminal device transmits the SR, the Preamble, the uplink transmission data transmitted on the CG resources, the NACK message for the PDSCH received by the terminal device within the PDCCH skipping duration, etc. Therefore, in the PDCCH skipping duration, the terminal device skips the PDCCH monitoring if the terminal device does not have a data transmission requirement; and the terminal device skips the PDCCH monitoring if the terminal device has a data transmission requirement. Thus, not only the scheduling performance of the terminal device is ensured, but also the power consumption of the terminal device can be reduced.

It should be understood that, in various embodiments of the disclosure, sequence numbers of the abovementioned processes do not mean execution sequences. The execution sequences of various processes should be determined according to functions and internal logic of the processes, and should not be construed as any limitation on the implementation processes of the embodiments of the disclosure.

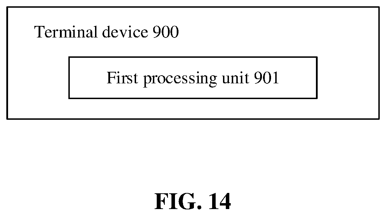

In order to implement the abovementioned channel monitoring method, the embodiments of the disclosure provide a terminal device. A schematic diagram of an optional composition structure of the terminal device 900, as illustrated in FIG. 14, includes a first processing unit 901.

The first processing unit 901 is configured to resume PDCCH monitoring when a terminal device sends first information within a PDCCH skipping duration.

In some embodiments, the first information includes: an SR.

In some embodiments, the SR is in a pending state.

In some embodiments, the first processing unit 901 is configured to monitor the PDCCH on all activated serving cells.

In some embodiments, the first processing unit 901 is further configured to determine to monitor the PDCCH on at least one activated serving cell according to a related parameter of an LCP restriction of an uplink logical channel that triggers the SR.

In some embodiments, the first processing unit 901 is configured to determine to monitor the PDCCH on all activated serving cells in a case where the uplink logical channel that triggers the SR is not configured with the related parameter of the LCP restriction.

In some embodiments, the first processing unit 901 is configured to: determine a first serving cell set that is allowed to transmit the uplink logical channel according to the related parameter of the LCP restriction in a case where the uplink logical channel that triggers the SR is configured with the related parameter of the LCP restriction; and
determine to monitor the PDCCH on a serving cell corresponding to uplink scheduling information capable of indicating any serving cell in the first serving cell set.

In some embodiments, the first information includes a preamble. The preamble is sent on a corresponding random access channel resource based on a selected synchronous signal block in a case where the terminal device triggers beam failure recovery.

In some embodiments, the first processing unit 901 is further configured to start an RAR receiving window or an Msg B receiving window.

In some embodiments, the first processing unit 901 is configured to monitor the PDCCH at the RAR receiving window or the Msg B receiving window.

In some embodiments, the first processing unit 901 is further configured to stop skipping the PDCCH monitoring based on a configuration of a network device.

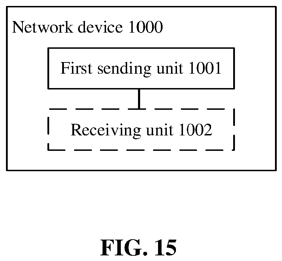

In order to implement the abovementioned channel monitoring method, the embodiments of the disclosure provide a network device. A schematic diagram of an optional composition structure of the network device 1000, as illustrated in FIG. 15, includes a first sending unit 1001.

The first sending unit 1001 is configured to send first configuration information. The first configuration information is used to determine whether the terminal device stops skipping the PDCCH monitoring under a first condition within the PDCCH skipping duration.

In some embodiments, the first condition includes that: the network device receives a NACK message sent by the terminal device for a PDSCH. Correspondingly, the network device 1000 may further include a receiving unit 1002.

The receiving unit 1002 is configured to receive the NACK message sent by the terminal device for the PDSCH.

In some embodiments, the PDSCH is transmitted based on SPS resources within the PDCCH skipping duration.

In some embodiments, the first configuration information is carried in a system broadcast message or RRC signaling.

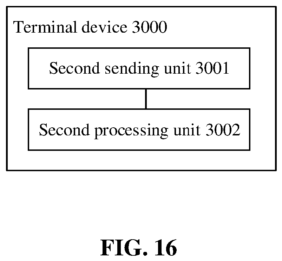

In order to implement the abovementioned channel monitoring method, the embodiments of the disclosure provide a terminal device. A schematic diagram of an optional composition structure of the terminal device 3000, as illustrated in FIG. 16, includes a second sending unit 3001 and a second processing unit 3002.

The second sending unit 3001 is configured to transmit second information within a PDCCH skipping duration.

The second processing unit 3002 is configured to start a retransmission timer that corresponds to an HARQ process corresponding to the second information, and resume the PDCCH monitoring after the second sending unit transmits the second information within the PDCCH skipping duration.

In some embodiments, the second processing unit 3002 is configured to: start an RTT that corresponds to the HARQ process corresponding to the second information when transmitting the second information within the PDCCH skipping duration; and
in a case where the RTT is timeout, start the retransmission timer corresponding to the HARQ process for transmitting the second information, and resume the PDCCH monitoring.

In some embodiments, the second processing unit 3002 is configured to: in a case where the second information includes the uplink transmission, start the uplink retransmission timer corresponding to the HARQ process of the uplink transmission, and resumes the PDCCH monitoring.

In some embodiments, the uplink transmission is sent on CG resources.

In some embodiments, the second processing unit 3002 is configured to: in a case where the second information includes a NACK message for the downlink transmission received by the terminal device within the PDCCH skipping duration, start a downlink retransmission timer corresponding to the HARQ process of the downlink transmission, and resume the PDCCH monitoring.

In some embodiments, the downlink transmission is transmitted based on the SRS resources.

In some embodiments, the second processing unit 3002 is configured to monitor the PDCCH on a serving cell within a DRX activation period.

In some optional embodiment modes, the second processing unit 3002 is further configured to stop skipping the PDCCH monitoring.

In some embodiments, the second processing unit 3002 is further configured to stop skipping the PDCCH monitoring based on the configuration of the network device.

The embodiments of the disclosure further provide a terminal device, which includes a processor and a memory configured to store a computer program capable of running on the processor. The processor is configured to execute the operations of the channel monitoring method executed by the abovementioned terminal device when running the computer program.

The embodiments of the disclosure further provide a network device, which includes a processor and a memory configured to store a computer program capable of running on the processor. The processor is configured to execute the operations of the channel monitoring method executed by the abovementioned network device when running the computer program.

The embodiments of the disclosure further provides a chip, which may include a processor, configured to call and run a computer program in a memory to enable a device installed with the chip to execute the channel monitoring method executed by the abovementioned terminal device.

The embodiments of the disclosure further provides a chip, which may include a processor, configured to call and run a computer program in a memory to enable a device installed with the chip to execute the channel monitoring method executed by the abovementioned network device.

The embodiments of the disclosure further provide a storage medium, having stored thereon an executable program. The executable program implements the channel monitoring method executed by the abovementioned terminal device when being executed by a processor.

The embodiments of the disclosure further provide a storage medium, having stored thereon an executable program. The executable program implements the channel monitoring method executed by the abovementioned network device when being executed by a processor.

The embodiments of the disclosure further provide a computer program product, including computer program instructions. The computer program instructions enable a computer to execute the channel monitoring method executed by the abovementioned terminal device.

The embodiments of the disclosure further provide a computer program product, including computer program instructions. The computer program instructions enable a computer to execute the channel monitoring method executed by the abovementioned network device.

The embodiments of the disclosure further provide a computer program. The computer program enables a computer to execute the channel monitoring method executed by the abovementioned terminal device.

The embodiments of the disclosure further provide a computer program. The computer program enables a computer to execute the channel monitoring method executed by the abovementioned network device.

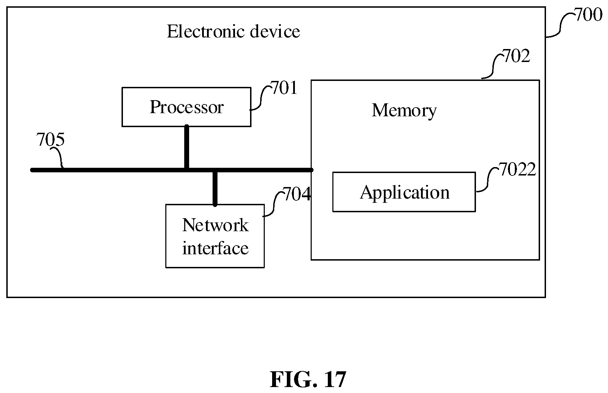

FIG. 17 illustrates a schematic diagram of hardware composition structure of an electronic device (terminal device or network device) not being part of the invention. The electronic device 700 includes: at least one processor 701, a memory 702 and at least one network interface 704. Various components of the electronic device 700 are coupled together through a bus system 705. It can be understood that the bus system 705 is used to implement connection and communication between these components. In addition to a data bus, the bus system 705 further includes a power bus, a control bus, and a status signal bus. However, for clarity of description, various buses are marked as the bus system 705 in FIG. 17.

It is to be understood that the memory 702 may be a volatile memory or a non-volatile memory, or may include both a volatile memory and a non-volatile memory. The non-volatile memory may be a Read Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a flash memory, a magnetic surface memory, an optical disk or a Compact Disc Read-Only Memory (CD-ROM); and the magnetic surface memory may be a magnetic disk memory or a magnetic tape memory. The volatile memory may be a RAM that acts as an external cache. By way of example and not limitation, many forms of RAM are available, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), and a Direct Rambus Random Access Memory (DRRAM). The memory 702 described in the embodiment of the disclosure is intended to include, but is not limited to, these and any other suitable types of memories.

The memory 702 in the embodiment of the disclosure is configured to store various types of data to support operation of the electronic device 700. Examples of such data include: any computer disclosure operated on the electronic device 700, such as an application 7022. A program for implementing the method in the embodiment of the disclosure may be included in the disclosure program 7022.

The method disclosed in the abovementioned embodiment of the disclosure may be applied to the processor 701, or may be implemented by the processor 701. The processor 701 may be an integrated circuit chip with signal processing capability. During implementation, the operations of the foregoing method can be completed by hardware integrated logic circuits in the processor 701 or instructions in the form of software. The abovementioned processor 701 may be a general-purpose processor, a Digital Signal Processor (DSP), or other programmable logic devices, discrete gate or transistor logic devices, discrete hardware components, or the like. The processor 701 may implement or execute various methods, operations, and logical block diagrams disclosed in the embodiments of the disclosure. The general-purpose processor may be a microprocessor, or any conventional processor. Operations of the methods disclosed with reference to the embodiments of the disclosure may be directly performed and accomplished by a hardware decoding processor, or may be performed and accomplished by a combination of hardware and software modules in the decoding processor. A software module may be located in a storage medium. The storage medium is located in the memory 702, and the processor 701 reads information in the memory 702 and completes the operations of the foregoing method in combination with hardware thereof.

In an exemplary embodiment, the electronic device 700 may be implemented by one or more Disclosure Specific Integrated Circuits (ASICs), DSPs, Programmable Logic Devices (PLDs), Complex Programmable Logic Devices (CPLDs), FPGAs, general-purpose processors, controllers, MCUs, MPUs, or other electronic elements for executing the foregoing methods.

The present disclosure is described with reference to flowcharts and/or block diagrams of the method, the device (system) and the computer program product according to the embodiments of the present disclosure. It is to be understood that each flow and/or block in the flowcharts and/or the block diagrams and a combination of the flows and/or the blocks in the flowcharts and/or the block diagrams may be implemented by computer program instructions. These computer program instructions may be provided for a general-purpose computer, a dedicated computer, an embedded processor or processors of other programmable data processing devices to generate a machine, so that an apparatus for achieving functions designated in one or more flows of the flowcharts and/or one or more blocks of the block diagrams is generated via instructions executed by the computers or the processors of the other programmable data processing devices.

These computer program instructions may also be stored in a computer readable memory capable of guiding the computers or the other programmable data processing devices to work in a specific mode, so that a manufactured product including an instruction apparatus is generated via the instructions stored in the computer readable memory, and the instruction apparatus achieves the functions designated in one or more flows of the flowcharts and/or one or more blocks of the block diagrams.

These computer program instructions may also be loaded to the computers or the other programmable data processing devices, so that processing implemented by the computers is generated by executing a series of operation operations on the computers or the other programmable devices, and therefore the instructions executed on the computers or the other programmable devices provide a operation of achieving the functions designated in one or more flows of the flowcharts and/or one or more blocks of the block diagrams.

It should be understood that the terms "system" and "network" in the disclosure are often used interchangeably herein. The term "and/or" in this disclosure describes only an association relationship for describing associated objects and represents that three relationships may exist. For example, A and/or B may represent the following three cases: Only A exists, both A and B exist, and only B exists. In addition, the character "/" in the disclosure generally indicates an "or" relationship between the associated objects.

## Claims

1. A channel monitoring method, comprising:
within a Physical Downlink Control Channel, PDCCH, skipping duration, resuming (S201), by a terminal device, PDCCH monitoring when the terminal device sends first information,
**characterized in that** the first information comprises a preamble; and
the preamble is sent on a corresponding random access channel resource based on a selected Synchronization Signal Block/Physical Broadcast Channel, SS/PBCH Block, SSB, in a case where the terminal device triggers beam failure recovery.

2. The method of claim 1, wherein the method further comprises:
starting, by the terminal device, a Random Access Response, RAR, receiving window or a message B, Msg B, receiving window.

3. The method of claim 2, wherein resuming (S201), by the terminal device, the PDCCH monitoring comprises:
monitoring (S403), by the terminal device, the PDCCH at the RAR receiving window or the MsgB receiving window.

4. The method of any one of claims 1 to 3, further comprising:
stopping, by the terminal device, skipping the PDCCH monitoring.

5. A channel monitoring method, comprising:
transmitting (S2001), by a terminal device, second information within a Physical Downlink Control Channel, PDCCH, skipping duration;
after transmitting the second information within the PDCCH skipping duration, starting (S2002), by the terminal device, a retransmission timer that corresponds to a Hybrid Automatic Repeat Request, HARQ, process corresponding to the second information, and resuming (S2002), by the terminal device, PDCCH monitoring.

6. The method of claim 5, after transmitting the second information within the PDCCH skipping duration, starting (S2002), by the terminal device, the retransmission timer that corresponds to the HARQ process corresponding to the second information, and resuming (S2002), by the terminal device, the PDCCH monitoring comprises:
when transmitting the second information within the PDCCH skipping duration, starting, by the terminal device, a Round Trip Timer, RTT, that corresponds to the HARQ process corresponding to the second information; and
in a case where the RTT is timeout, starting, by the terminal device, the retransmission timer corresponding to the HARQ process for transmitting the second information, and resuming, by the terminal device, the PDCCH monitoring.

7. The method of claim 5 or 6, wherein starting (S2002), by the terminal device, the retransmission timer corresponding to the HARQ process for transmitting the second information, and resuming (S2002), by the terminal device, the PDCCH monitoring comprises:
in a case where the second information comprises uplink transmission, starting (S503), by the terminal device, an uplink retransmission timer corresponding to the HARQ process of the uplink transmission, and resuming (S503), by the terminal device, the PDCCH monitoring; wherein the uplink transmission is sent on Configured Grant, CG, resources; and/or
wherein starting (S2002), by the terminal device, the retransmission timer corresponding to the HARQ process for transmitting the second information, and resuming (S2002), by the terminal device, the PDCCH monitoring comprises:
in a case where the second information comprises a Non-Acknowledgment, NACK, message for downlink transmission received by the terminal device within the PDCCH skipping duration, starting (S604), by the terminal device, a downlink retransmission timer corresponding to the HARQ process of the downlink transmission, and resuming (S604), by the terminal device, the PDCCH monitoring; wherein the downlink transmission is transmitted based on Semi-Persistent Scheduling, SPS, resources.

8. The method of any one of claims 5 to 7, wherein resuming (S2002), by the terminal device, the PDCCH monitoring comprises:
monitoring, by the terminal device, the PDCCH on a serving cell within a Discontinuous Reception, DRX, activation period;
wherein the method further comprises:
stopping, by the terminal device, skipping the PDCCH monitoring based on a configuration of a network device.

9. A channel monitoring method, comprising:
sending (S801), by a network device, first configuration information, wherein the first configuration information is used to determine whether a terminal device stops skipping Physical Downlink Control Channel, PDCCH, monitoring under a first condition within a PDCCH skipping duration, wherein within the PDCCH skipping duration, PDCCH monitoring is resumed when first information is sent by the terminal device,
**characterized in that** the first information comprises a preamble; and
the preamble is sent on a corresponding random access channel resource based on a Synchronization Signal Block/Physical Broadcast Channel, SS/PBCH Block, SSB, in a case where the terminal device triggers beam failure recovery.

10. A terminal device, comprising a processor and a memory configured to store a computer program capable of running on the processor, wherein the processor is configured to execute the channel monitoring method according to any one of claims 1-4 or any one of claims 5-8.

## Patentansprüche

1. Kanalüberwachungsverfahren, umfassend:
innerhalb einer Überspringungsdauer eines physischen Downlink-Steuerkanals, PDCCH, Wiederaufnehmen (S201), durch ein Endgerät, einer PDCCH-Überwachung, wenn das Endgerät eine erste Information sendet,
**dadurch gekennzeichnet, dass** die erste Information eine Präambel umfasst; und
die Präambel auf einer entsprechenden Direktzugriffskanal-Ressource auf der Grundlage eines ausgewählten Synchronisationssignalblocks/physischen Broadcast-Kanals, SS/PBCH-Blocks, SSB, gesendet wird, in einem Fall, in dem das Endgerät eine Strahlausfallwiederherstellung auslöst.

2. Verfahren nach Anspruch 1, wobei das Verfahren ferner umfasst:
Starten, durch das Endgerät, eines Empfangsfensters einer Direktzugriffsantwort, RAR, oder eines Empfangsfensters einer Nachricht B, Msg B.

3. Verfahren nach Anspruch 2, wobei das Wiederaufnehmen (S201), durch das Endgerät, der PDCCH-Überwachung umfasst:
Überwachen (S403), durch das Endgerät, des PDCCH an dem RAR-Empfangsfenster oder dem MsgB-Empfangsfenster.

4. Verfahren nach einem der Ansprüche 1 bis 3, ferner umfassend:
Stoppen, durch das Endgerät, des Überspringens der PDCCH-Überwachung.

5. Kanalüberwachungsverfahren, umfassend:
Übertragen (S2001), durch ein Endgerät, einer zweiten Information innerhalb einer Überspringungsdauer eines physischen Downlink-Steuerkanals, PDCCH;
nach dem Übertragen der zweiten Information innerhalb der PDCCH-Überspringungsdauer, Starten (S2002), durch das Endgerät, eines Neuübertragungs-Timers, der einem Prozess einer hybriden automatischen Wiederholungsanforderung, HARQ, entspricht, welcher der zweiten Information entspricht, und Wiederaufnehmen (S2002), durch das Endgerät, einer PDCCH-Überwachung.

6. Verfahren nach Anspruch 5, nach dem Übertragen der zweiten Information innerhalb der PDCCH-Überspringungsdauer, das Starten (S2002), durch das Endgerät, des Neuübertragungs-Timers, der dem HARQ-Prozess entspricht, welcher der zweiten Information entspricht, und das Wiederaufnehmen (S2002), durch das Endgerät, der PDCCH-Überwachung umfasst:
beim Übertragen der zweiten Information innerhalb der PDCCH-Überspringungsdauer, Starten, durch das Endgerät, eines Rundlauf-Timers, RTT, der dem HARQ-Prozess entspricht, welcher der zweiten Information entspricht; und
in einem Fall, in dem der RTT abläuft, Starten, durch das Endgerät, des Neuübertragungs-Timers, der dem HARQ-Prozess zum Übertragen der zweiten Information entspricht, und Wiederaufnehmen, durch das Endgerät, der PDCCH-Überwachung.

7. Verfahren nach Anspruch 5 oder 6, wobei das Starten (S2002), durch das Endgerät, des Neuübertragungs-Timers, der dem HARQ-Prozess zum Übertragen der zweiten Information entspricht, und das Wiederaufnehmen (S2002), durch das Endgerät, der PDCCH-Überwachung umfasst:
in einem Fall, in dem die zweite Information eine Uplink-Übertragung umfasst, Starten (S503), durch das Endgerät, eines Uplink-Neuübertragungs-Timers, der dem HARQ-Prozess der Uplink-Übertragung entspricht, und Wiederaufnehmen (S503), durch das Endgerät, der PDCCH-Überwachung; wobei die Uplink-Übertragung auf Ressourcen einer konfigurierten Zuteilung, CG, gesendet wird; und/oder
wobei das Starten (S2002), durch das Endgerät, des Neuübertragungs-Timers, der dem HARQ-Prozess zum Übertragen der zweiten Information entspricht, und das Wiederaufnehmen (S2002), durch das Endgerät, der PDCCH-Überwachung umfasst:
in einem Fall, in dem die zweite Information eine Nicht-Bestätigung, NACK, für eine Downlink-Übertragung umfasst, die durch das Endgerät innerhalb der PDCCH-Überspringungsdauer empfangen wird, Starten (S604), durch das Endgerät, eines Downlink-Neuübertragungs-Timers, der dem HARQ-Prozess der Downlink-Übertragung entspricht, und Wiederaufnehmen (S604), durch das Endgerät, der PDCCH-Überwachung; wobei die Downlink-Übertragung auf der Grundlage von Ressourcen einer semi-persistenten Planung, SPS, übertragen wird.

8. Verfahren nach einem der Ansprüche 5 bis 7, wobei das Wiederaufnehmen (S2002), durch das Endgerät, der PDCCH-Überwachung umfasst:
Überwachen, durch das Endgerät, des PDCCH auf einer versorgenden Zelle innerhalb eines Aktivierungszeitraums einer diskontinuierlichen Empfangsfunktion, DRX;
wobei das Verfahren ferner umfasst:
Stoppen, durch das Endgerät, des Überspringens der PDCCH-Überwachung auf der Grundlage einer Konfiguration einer Netzwerkvorrichtung.

9. Kanalüberwachungsverfahren, umfassend:
Senden (S801), durch eine Netzwerkvorrichtung, einer ersten Konfigurationsinformation, wobei die erste Konfigurationsinformation verwendet wird, um zu bestimmen, ob ein Endgerät das Überspringen einer Überwachung eines physischen Downlink-Steuerkanals, PDCCH, unter einer ersten Bedingung innerhalb einer PDCCH-Überspringungsdauer stoppt, wobei innerhalb der PDCCH-Überspringungsdauer die PDCCH-Überwachung wiederaufgenommen wird, wenn eine erste Information durch das Endgerät gesendet wird,
**dadurch gekennzeichnet, dass** die erste Information eine Präambel umfasst; und
die Präambel auf einer entsprechenden Direktzugriffskanal-Ressource auf der Grundlage eines Synchronisationssignalblocks/physischen Broadcast-Kanals, SS/PBCH-Blocks, SSB, gesendet wird, in einem Fall, in dem das Endgerät eine Strahlausfallwiederherstellung auslöst.

10. Endgerät, umfassend einen Prozessor und einen Speicher, der konfiguriert ist, um ein Computerprogramm zu speichern, das auf dem Prozessor ausführbar ist, wobei der Prozessor konfiguriert ist, um das Kanalüberwachungsverfahren nach einem der Ansprüche 1 bis 4 oder einem der Ansprüche 5 bis 8 auszuführen.

## Revendications

1. Un procédé de surveillance de canal, comprenant :
au cours d'une durée de saut d'un canal physique de commande de liaison descendante, PDCCH, la reprise (S201), par un dispositif terminal, de la surveillance du PDCCH lorsque le dispositif terminal envoie une première information,
**caractérisé en ce que** la première information comprend un préambule ; et
le préambule est envoyé sur une ressource de canal d'accès aléatoire correspondante sur la base d'un bloc de signal de synchronisation/canal physique de diffusion, bloc SS/PBCH, SSB, sélectionné, dans un cas où le dispositif terminal déclenche une récupération sur défaillance de faisceau.

2. Le procédé selon la revendication 1, dans lequel le procédé comprend en outre :
le démarrage, par le dispositif terminal, d'une fenêtre de réception de réponse d'accès aléatoire, RAR, ou d'une fenêtre de réception de message B, Msg B.

3. Le procédé selon la revendication 2, dans lequel la reprise (S201), par le dispositif terminal, de la surveillance du PDCCH comprend :
la surveillance (S403), par le dispositif terminal, du PDCCH au niveau de la fenêtre de réception RAR ou de la fenêtre de réception MsgB.

4. Le procédé selon l'une quelconque des revendications 1 à 3, comprenant en outre :
l'arrêt, par le dispositif terminal, du saut de la surveillance du PDCCH.

5. Un procédé de surveillance de canal, comprenant :
la transmission (S2001), par un dispositif terminal, d'une deuxième information au cours d'une durée de saut d'un canal physique de commande de liaison descendante, PDCCH ;
après la transmission de la deuxième information au cours de la durée de saut du PDCCH, le démarrage (S2002), par le dispositif terminal, d'un temporisateur de retransmission qui correspond à un processus de demande de répétition automatique hybride, HARQ, correspondant à la deuxième information, et la reprise (S2002), par le dispositif terminal, de la surveillance du PDCCH.

6. Le procédé selon la revendication 5, après la transmission de la deuxième information au cours de la durée de saut du PDCCH, le démarrage (S2002), par le dispositif terminal, du temporisateur de retransmission qui correspond au processus HARQ correspondant à la deuxième information, et la reprise (S2002), par le dispositif terminal, de la surveillance du PDCCH comprend :
lors de la transmission de la deuxième information au cours de la durée de saut du PDCCH, le démarrage, par le dispositif terminal, d'un temporisateur d'aller-retour, RTT, qui correspond au processus HARQ correspondant à la deuxième information ; et
dans un cas où le RTT expire, le démarrage, par le dispositif terminal, du temporisateur de retransmission correspondant au processus HARQ pour transmettre la deuxième information, et la reprise, par le dispositif terminal, de la surveillance du PDCCH.

7. Le procédé selon la revendication 5 ou 6, dans lequel le démarrage (S2002), par le dispositif terminal, du temporisateur de retransmission correspondant au processus HARQ pour transmettre la deuxième information, et la reprise (S2002), par le dispositif terminal, de la surveillance du PDCCH comprend :
dans un cas où la deuxième information comprend une transmission de liaison montante, le démarrage (S503), par le dispositif terminal, d'un temporisateur de retransmission de liaison montante correspondant au processus HARQ de la transmission de liaison montante, et la reprise (S503), par le dispositif terminal, de la surveillance du PDCCH ; la transmission de liaison montante étant envoyée sur des ressources d'octroi configuré, CG ; et/ou
dans lequel le démarrage (S2002), par le dispositif terminal, du temporisateur de retransmission correspondant au processus HARQ pour transmettre la deuxième information, et la reprise (S2002), par le dispositif terminal, de la surveillance du PDCCH comprend :
dans un cas où la deuxième information comprend un message de non-acquittement, NACK, pour une transmission de liaison descendante reçue par le dispositif terminal au cours de la durée de saut du PDCCH, le démarrage (S604), par le dispositif terminal, d'un temporisateur de retransmission de liaison descendante correspondant au processus HARQ de la transmission de liaison descendante, et la reprise (S604), par le dispositif terminal, de la surveillance du PDCCH ; la transmission de liaison descendante étant transmise sur la base de ressources d'ordonnancement semi-persistant, SPS.

8. Le procédé selon l'une quelconque des revendications 5 à 7, dans lequel la reprise (S2002), par le dispositif terminal, de la surveillance du PDCCH comprend :
la surveillance, par le dispositif terminal, du PDCCH sur une cellule de desserte au cours d'une période d'activation de réception discontinue, DRX ;
le procédé comprenant en outre :
l'arrêt, par le dispositif terminal, du saut de la surveillance du PDCCH sur la base d'une configuration d'un dispositif de réseau.

9. Un procédé de surveillance de canal, comprenant :
l'envoi (S801), par un dispositif de réseau, d'une première information de configuration, la première information de configuration étant utilisée pour déterminer si un dispositif terminal arrête de sauter la surveillance d'un canal physique de commande de liaison descendante, PDCCH, sous une première condition au cours d'une durée de saut du PDCCH, dans lequel, au cours de la durée de saut du PDCCH, la surveillance du PDCCH est reprise lorsqu'une première information est envoyée par le dispositif terminal,
**caractérisé en ce que** la première information comprend un préambule ; et
le préambule est envoyé sur une ressource de canal d'accès aléatoire correspondante sur la base d'un bloc de signal de synchronisation/canal physique de diffusion, bloc SS/PBCH, SSB, dans un cas où le dispositif terminal déclenche une récupération sur défaillance de faisceau.

10. Un dispositif terminal, comprenant un processeur et une mémoire configurée pour stocker un programme informatique apte à s'exécuter sur le processeur, dans lequel le processeur est configuré pour exécuter le procédé de surveillance de canal selon l'une quelconque des revendications 1 à 4 ou l'une quelconque des revendications 5 à 8.
